# EUROPEAN PATENT APPLICATION

(11) **EP 4 768 350 A1**
(43) Date of publication of application: **01.07.2026**
(21) Application number: 24223622.2
(22) Date of filing: 30.12.2024
(51) Int. Cl.: B60T 1/06, F16D 55/40, F16D 65/18

(54) **A WET DISC BRAKE**

(71) Applicant: Meritor Heavy Vehicle Systems Cameri SpA, 28062 Cameri (NO) (IT)
(72) Inventor: Tiziani, Eugenio, 28062 Cameri (IT)
(74) Representative: Whitfield, Jack Stephen

(57) **Abstract**

A wet disc brake (16) for an off-highway vehicle is provided. The wet disc brake (16) includes a brake caliper (20); a disc pack (22) located within the brake caliper (20) and rotatably fixed to a vehicle shaft, the shaft having a longitudinal axis extending in an inboard-outboard direction; a service piston (24) actuatable within the brake caliper (20) during a brake operation to compress the disc pack (22) to inhibit rotation of the shaft and slow the vehicle; and a parking piston (30) coaxial with the service piston (24) and actuatable within the brake caliper (20) during a parking operation to apply a force to the service piston (24) to actuate the service piston (24). At least a portion of the parking piston (30) axially overlaps the service piston (24) in the inboard-outboard direction.

## Description

### Technical Field

The present disclosure relates to a wet disc brake for an off-highway vehicle, and an axle assembly comprising the wet disc brake.

### Background

Wet disc brakes are often used in off-highway vehicles in industries such as mining. The wet disc brakes typically have a disc pack of multiple friction discs that are splined to a shaft of the vehicle. To slow the vehicle, a service piston is hydraulically actuated to compress the disc pack, bringing counter discs into contact with the friction discs to reduce the speed of the shaft.

When the vehicle is parked, a parking brake can be applied to lock the vehicle wheels and prevent the vehicle rolling away. A spring applied, hydraulically released (SAHR) parking brake is sometimes used for wet disc brakes. Such a wet disc brake typically has multiple springs such as a pack of Belville washers located in series with a parking piston, which itself is in series with the service piston. The parking piston is held off the service piston with hydraulic fluid that locates in a parking piston chamber and applies a constant force to the parking piston to keep the pack of Belville washers compressed. To apply the parking brake, the hydraulic fluid is evacuated from the parking piston chamber so the Belville washers are free to actuate the parking piston, which will in turn actuate the service piston so the wheels of the vehicle cannot rotate. The parking brake is released by reintroducing hydraulic fluid.

A more compact wet disc brake would be advantageous as it could offer even more increased flexibility in terms of placement on the vehicle.

It is an aim of the present invention to address one or more of the disadvantages associated with the prior art.

### Summary of Invention

Aspects and embodiments of the invention provide a a wet disc brake for an off-highway vehicle, and an axle assembly comprising the wet disc brake, as claimed in the appended claims.

In one aspect, a wet disc brake is provided for an off-highway vehicle including a vehicle shaft having a longitudinal axis extending in an inboard-outboard direction. The wet disc brake includes a brake caliper configured to be locatable on the shaft. The brake caliper includes: a disc pack located within the brake caliper and configured to be rotatably fixable to the shaft; a service piston actuatable within the brake caliper during a brake operation to compress the disc pack to inhibit rotation of the shaft and slow the vehicle, the service piston having an inboard face defining a first radial plane and an outboard face defining a second radial plane spaced from the first radial plane; and a parking piston coaxial with the service piston and actuatable within the brake caliper during a parking operation to apply a force to the service piston to actuate the service piston. At least a portion of the parking piston is located between the first and second radial planes.

In other words, at least a portion of the parking piston is radially aligned with the service piston along the longitudinal axis. This enables the amount of axial space required for the wet disc brake to be minimised. Such a reduction in the 3D space envelope required for installation enables the wet disc brake to be fixed in multiple locations of the vehicle, such as on a steered axle at the knuckle, or another location that is remote from the differential.

The parking piston may include an engaging surface configured to directly or indirectly engage a corresponding engageable surface of the service piston when the parking piston is actuated, to actuate the service piston in the direction of the disc pack.

This enables force transfer from the parking piston to the service piston without requiring the parking piston to be in series and axially offset from the service piston, which required more space in the axial direction.

The parking piston may be substantially cylindrical and the service piston may be substantially cylindrical. At least a portion of the parking piston may be concentric with the service piston.

In an embodiment, the parking piston does not project axially beyond the service piston.

This further reduces amount of axial space required for the wet disc brake.

The wet disc brake may also include at least one resilient element to actuate the parking piston.

The parking piston may be located in a parking piston chamber defined by the brake caliper. The parking piston chamber may be in communication with a parking piston conduit for hydraulic fluid such that when the parking piston chamber includes hydraulic fluid, the parking piston is restricted from actuating the service piston.

Such a parking brake may use the same hydraulic source as the service brake but work in the opposite way.

The parking piston may include a parking piston shoulder portion having a substantially radially extending face which includes the engaging surface.

The parking piston shoulder portion enables force transfer from the parking piston to the service piston without requiring the parking piston to be in series and axially offset from the service piston.

The service piston may include a service piston shoulder portion having a substantially radially extending face which includes the engageable surface. The radially extending face of the parking piston may be configured to opposed the radially extending face of the service piston.

As the engaging surface of the parking piston opposes the engageable surface of the service piston, the parking piston can actuate the service piston when desired, to lock a wheel of the vehicle.

A majority of the parking piston may be arranged radially outwardly of the service piston.

This further reduces the amount of axial space required. This arrangement also allows easier maintenance as the components of the wet disc brake are more accessible. The term 'majority' is intended to mean that at least 50% of the parking piston is arranged radially outwardly of the service piston. Optionally, at least 75% of the parking piston is arranged radially outwardly of the service piston.

The parking piston shoulder portion may be a radially inward part of the parking piston.

In other words, the parking piston shoulder portion may be more radially inward than the remainder of the parking piston.

The service piston shoulder portion may be a radially outward part of the service piston.

In other words, the service piston shoulder portion may be more radially outward than the remainder of the service piston.

The wet disc brake may also include a plurality of resilient elements, circumferentially distributed, to actuate the parking piston.

This helps to apply sufficient force to apply the parking piston without requiring multiple springs axially in line, for example, which would increase the space requirement. The wet disc brake is also easily scalable for different applications by the number of resilient elements utilised, as different applications may require different amounts of force.

The parking piston may include a plurality of recesses in a surface facing away from the disc pack to locate the plurality of resilient elements.

The recesses help allow easy assembly as they locate and retain the resilient elements.

The brake caliper may be two-part, includes a caliper housing and a cover portion fixed to the caliper housing.

This helps to enable easy maintenance as the brake caliper can be separated to enable access to the components located within it. This also helps with assembly as the disc pack, service piston and parking piston can be located inside the caliper housing before the cover portion is then fixed to the caliper housing to retain the disc pack, service piston and parking piston.

The caliper housing may include a bore. The bore may have a varying diameter to define the parking piston chamber, a service piston chamber and a disc pack chamber.

The parking piston chamber may have a first diameter. The service piston chamber may have a second diameter. The disc pack chamber may have a third diameter. The first diameter may be greater than the second diameter. The second diameter may be greater than the third diameter.

The caliper housing may include a service piston conduit for hydraulic fluid. The cover portion may include the parking piston conduit.

In a further aspect, an axle assembly for an off-highway vehicle is provided, including a shaft in communication with a wheel of the vehicle, and the wet disc brake of the previous aspect, located on the shaft.

Other technical features may be readily apparent to one skilled in the art from the following figures, descriptions, and claims. Other technical features may be readily apparent to one skilled in the art from the following figures, descriptions, and claims.

Within the scope of this application, it is expressly intended that the various aspects, embodiments, examples and alternatives set out in the preceding paragraphs, in the claims and/or in the following description and drawings, and, in particular, the individual features thereof, may be taken independently or in any combination. All embodiments and/or features of any embodiment can be combined in any way and/or combination unless such features are incompatible. The applicant reserves the right to change any originally filed claim or file any new claim accordingly, including the right to amend any originally filed claim to depend from and/or incorporate any feature of any other claim, although not originally claimed in that manner.

Further benefits and advantages of the present invention will become apparent from the following detailed description of at least one exemplary embodiment for carrying out the present invention with reference to the accompanying drawings.

### Brief Description of Drawings

One or more embodiments of the invention will now be described, by way of example only, with reference to the accompanying drawings, in which:
FIG. 1 is is a schematic view of a vehicle, showing suitable locations for a wet disc brake according to the invention;
FIG. 2 is a perspective view of a wet disc brake according to an embodiment of the invention;
FIG. 3 is a cross-sectional view of the wet disc brake of Figure 2 through the plane 4-4; and
FIG. 4 is a cross-sectional view of the wet disc brake of Figure 2 through the plane 3-3;
FIG. 5 is an exploded view of the wet disc brake of Figure 1.

### Detailed Description

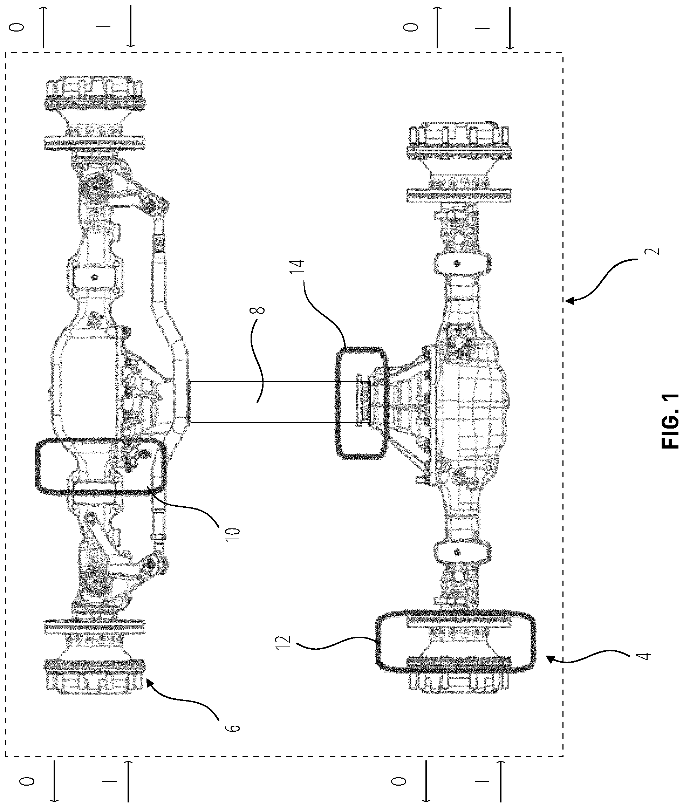

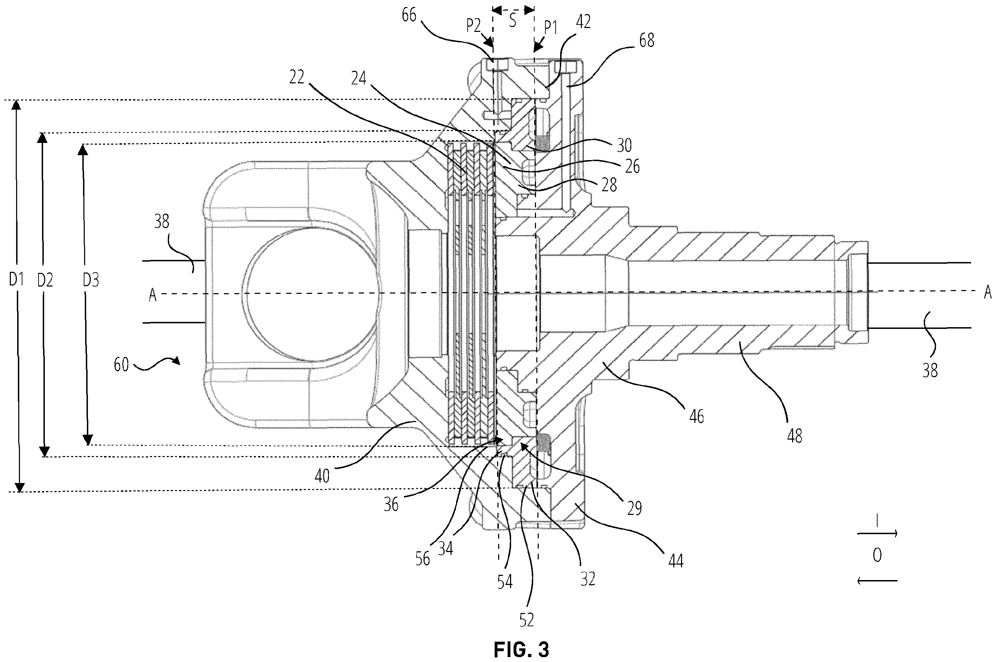

FIG. 1 shows example axle assemblies of an off-highway vehicle 2. In this embodiment, Figure 1 shows a front axle assembly 6 with steering capabilities and a rear axle assembly 4 that is typically connected to the front axle assembly 6 via a prop shaft 8. It will be appreciated that in other embodiments, there may be one or more additional axle assemblies, and/or there may be one or more inter-axle differential assemblies (not shown) located between the axle assemblies. A first location 10, a second location 12 and a third location 14 are shown. These locations are examples of suitable locations for a wet disc brake 16. The directions inboard I and outboard O refer to the orientation of the wet disc brake 16 when fitted to a vehicle in either the first location 10 or the second location 12 and are with reference to the longitudinal centreline of the vehicle 2. The radial direction R refers to a direction perpendicular to the longitudinal axis of a shaft that the wet disc brake 16 is configured to be located on (axis A-A - see FIG. 3). Various orientations of the wet disc brake 16 are described. For example, if the wet disc brake 16 is located in the third location 14, it will be appreciated that the directions inboard I and outboard O no longer refer to the longitudinal centreline of the vehicle 2. It will be understood, however, that any description using the terms outboard and inboard also applies to the wet disc brake 16 when it is in this alternative orientation at the third location 14. The same terms are simply used for consistency and simplicity, even though the wet disc brake 16 is rotated by 90 degrees in this embodiment. It will also be appreciated that the wet disc brake 16 could be located in other locations to those shown at the first location 10, the second location 12 and the third location 14. For example, any shaft within the vehicle 2 that may benefit from its speed being controllable would be suitable for locating the wet disc brake 16, for example any drive axle or driven axle.

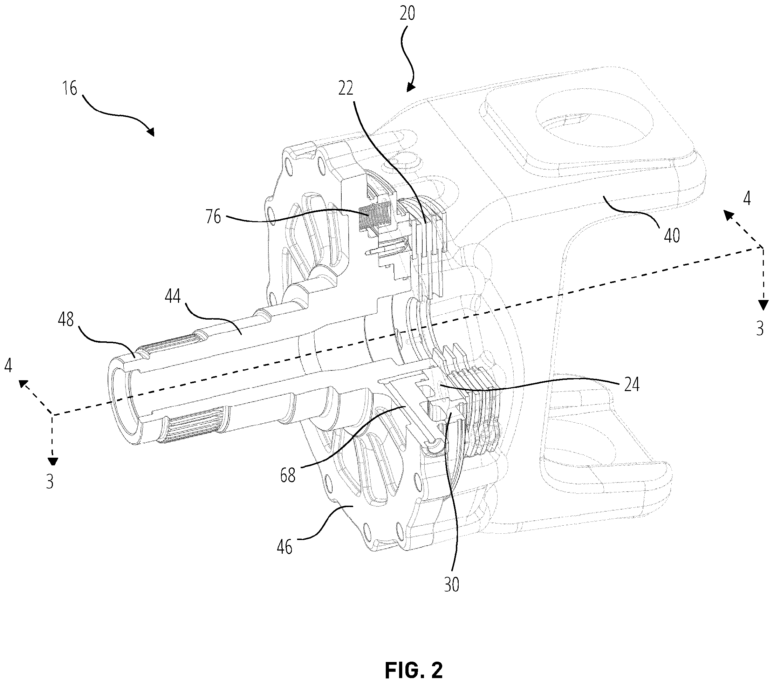

With reference to Figure 2, the wet disc brake 16 is intended for use in an off-highway vehicle 2 such as a vehicle 2 for mining, construction, material handling, or agriculture.

The wet disc brake 16 includes a brake caliper 20. In this embodiment, located within the brake caliper 20 are a disc pack 22, a service piston 24, a parking piston 30, and a plurality of resilient elements in the form of parking springs 76. The disc pack 22, the service piston 24, the parking piston 30, and the parking springs 76 are co-axially arranged on a longitudinal axis A-A and configured to locate on a shaft. In this embodiment, the shaft is a vehicle axle 38. The axle 38 could be a drive axle or a driven axle.

In this embodiment, the brake caliper 20 is a two-part brake caliper 20. The brake caliper 20 has a caliper housing 40 and a cover portion 44. The cover portion 44 is fixed to an outboard face of the caliper housing 40 in any suitable way. In this embodiment, the cover portion 44 has an annular rim 42 with a plurality of circumferentially distributed through bores for locating fastening elements (not shown) that locate in the bores of the caliper housing 40 to fix the cover portion 44 to the caliper housing 40. Alternatively, welding or a suitable adhesive could be used, but this would make maintenance more difficult. The cover portion 44 helps with assembly as the disc pack 22, the service piston 24 and the parking piston 30 can be located inside the caliper housing 40 before the cover portion 44 is then fixed to the caliper housing 40 to retain the disc pack 22, the service piston 24 and the parking piston 30, which locate between the caliper housing 40 and the cover portion 44. The cover portion 44 has a radially extending flange portion 46 that is integrally formed with an axially extending shaft portion 48. In other embodiments, the flange portion 46 and the shaft portion 48 may be formed separately and fixed together during assembly. The shaft portion 48 includes a plurality of stepped portions. The stepped portion with the largest external diameter is adjacent the flange portion 46, and each stepped portion along the longitudinal axis A-A has a reduced external diameter relative to the previous stepped portion, such that an end of the shaft portion 48 opposite the flange portion 46 has a minimum external diameter. In this embodiment, the stepped portion adjacent the end of the shaft portion 48 has an external spline 50 extending circumferentially around the longitudinal axis. The spline 50 rotationally fixes the cover portion 44 and therefore the brake caliper 20 relative to the axle housing (not shown) of the vehicle 2.

In this embodiment, an inboard face of the flange portion 46 engages the outboard face of the caliper housing 40. In this embodiment, the rim 42 includes the outboard face of the caliper housing 40 and is radially outwardly of the remainder of the caliper housing 40.

The caliper housing 40 is substantially conical with an outboard steering knuckle portion 60. The steering knuckle portion 60 includes a first arm 62 and a second arm 64 that each extend in an axial direction and include aligned through bores, to locate a kingpin or other suitable steering component at the wheel end. In other embodiments, the caliper housing 40 may not have any steering-related formations. The caliper housing 40 hs a central through bore that tapers outwardly in a similar way to the external surface of the caliper housing 40. In other words, the internal diameter of the through bore varies to define a parking piston chamber 52, a service piston chamber 54 and a disc pack chamber 56. The rim 42 surrounds a first portion of the bore having a diameter D1 (see FIG. 3) to define the parking piston chamber 52. The parking piston chamber 52 locates the parking piston 30. In this embodiment, the parking piston chamber 52 is located most outboard and has the largest diameter. The diameter of the parking piston chamber 52 is typically between 200mm and 300mm. The diameter D1 of the parking piston chamber 52 substantially matches the outer diameter of the parking pistons 30 (described in more detail below). A parking piston conduit 66 is defined in the caliper housing 40 and directs fluid to a parking piston chamber located inboard of the parking piston 30. The parking piston fluid chamber is in communication with a source of hydraulic fluid via the parking piston conduit 66. During normal operation of the wet disc brake 16, the parking piston chamber 52 is filled with hydraulic fluid. The pressure created in the parking piston chamber 52 acts against the parking springs 76 to help prevent the parking piston 30 from applying a force to the service piston 24. In this embodiment, the parking springs 76 are biased in the inboard direction such that they apply a force to the parking piston 30. The parking springs 76 are preloaded and retained by the cover portion 44 that is fixed to the caliper housing 40 during assembly after the disc pack 22, the service piston 24, the parking piston 30 and the parking springs 76 have been located.

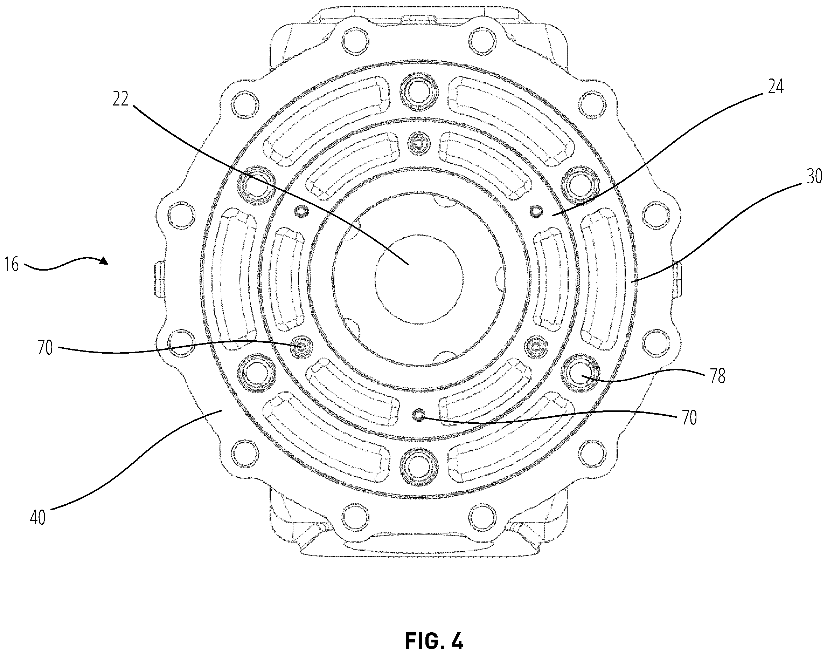

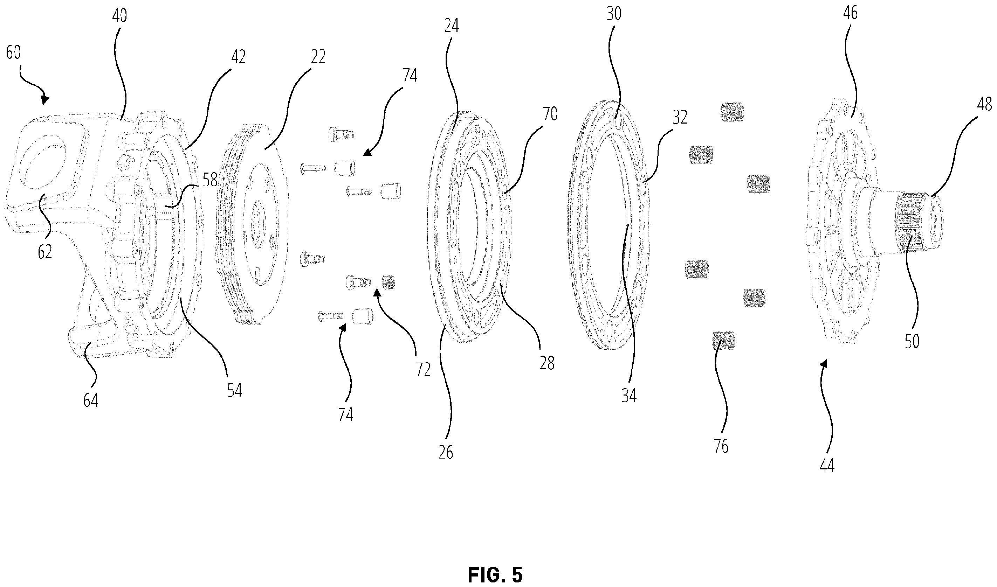

In this embodiment, the service piston chamber 54 is located inboard of, and has a smaller diameter D2 than, the parking piston chamber 52. The service piston chamber 54 locates the service piston 24. The diameter D2 of the service piston chamber 54 substantially matches the outer diameter of a parking piston sleeve portion 34 (described in more detail below) of the parking piston 30. The outer diameter of the service piston 24 (described in more detail below) substantially matches an inner diameter of the parking piston sleeve portion 34. The outer diameter of the service piston 24 substantially matches a third portion of the bore having a diameter D3 (described in more detail below). This helps to ensure that the service piston 24 lines up with the disc pack 22. During a braking operation, the service piston 24 is actuatable such that it engages an inboard surface of the disc pack 22. This will compress the disc pack 22 to slow the vehicle 2. A service piston conduit 68 is defined in the cover portion 44 and directs fluid to a service piston chamber located inboard of the service piston 24. The service piston chamber is in communication with a source of hydraulic fluid via the service piston conduit 68. During normal operation of the wet disc brake 16, to actuate the service piston 24, fluid enters through the service piston conduit 68, pressurizing the service piston chamber and urging the service piston 24 in the outboard direction to engage the disc pack 22. When the hydraulic pressure is released, the service piston 24 will return in the inboard direction to a rest position due to an urging force. In this embodiment, the service piston 24 has cavities 70 that locate a plurality of return spring arrangements 72 (see FIG. 4 and FIG. 5) to urge the service piston 24 back to its rest position once the pressure is released. The service piston 24 also has cavities 70 that locate a plurality of self-adjusting arrangements 74 (see FIG. 4 and FIG. 5) such that the service piston 24 returns by a defined amount each time to ensure that the starting point of the service piston 24 moves in the outboard direction over time to help ensure that it always remains adjacent the disc pack 22 with an appropriate clearance.

The internal surfaces of the service piston chamber 54 and the parking piston chamber 52 are typically machined such that they are smooth enough that the service piston 24 and the parking piston 30 can easily slide within them. Suitable sealing elements are provided between the engaging surfaces of the service piston 24 and the service piston chamber 54, and the parking piston 30 and the parking piston chamber 52, to contain the hydraulic fluid in the service piston chamber 54 and the parking piston chamber 52. In this embodiment, the sealing elements are in the form of O-rings.

The disc pack chamber 56 locates the disc pack 22. The disc pack chamber 56 has an internal diameter D3 as shown on FIG. 3. Typically, the disc pack chamber 56 contains a suitable lubricant, such as lubricating oil to preserve the life of the disc pack 22 as much as possible. Distributed circumferentially around an internal surface of the disc pack chamber 56 are a plurality of axially extending slots 58 (see FIG. 5) extending radially into the internal surface of the disc pack chamber 56. The slots 58 extend substantially the entire axial length of the disc pack chamber 56. Typically, the slots 58 are machined into the internal surface of the disc pack chamber 56 but could be manufactured in any suitable way. The slots 58 have a cross-section that is configured to correspond to projections that extend radially from counter discs of the disc pack 22. In this embodiment, the slots 58 have a cross-section that is a rounded off rectangle, to reduce stress points. However, it will be appreciated that any suitable cross-sectional shape could be used.

The disc pack 22 includes multiple counter discs arranged in series on the axis A-A and multiple friction discs also arranged in series on the axis A-A. A central bore of the disc pack 22 is splined such that it is rotationally fixed to the axle 38. In this embodiment, the friction discs are in an alternating arrangement with the counter discs so the counter discs can react the sheer forces and prevent damage to the friction discs or other components, but any suitable arrangement could be used. In this embodiment, there are four counter discs and three friction discs, but any suitable number could be used as long as the friction discs are sandwiched between the counter discs.

In this embodiment, as can be seen more clearly from FIG. 3 and FIG. 5, the parking piston 30 and service piston 24 have complimentary profiles to help minimise the amount of axial space required to locate them in the brake caliper 20. The service piston 24 is substantially cylindrical. As shown most clearly in FIG. 3, an inboard face of the service piston 24 defines a first radial plane P1. An outboard face of the service piston 24 defines a second radial plane P2. The first radial plane P1 is spaced from the second radial plane P2 by a distance S that corresponds to the axial thickness of the service piston 24. At least a portion of the parking piston 30 is located between the first radial plane P1 and the second radial plane P2. In this embodiment, the majority of the parking piston 30 is located between the first radial plane P1 and the second radial plane P2. In other words, the parking piston 30 is radially aligned along the longitudinal axis with the service piston 24, minimising the amount of axial space required within the wet disc brake 16 and reducing the overall axial length of the wet disc brake 16.

As shown most clearly in FIG. 3 and FIG. 5, in this embodiment, the parking piston 30 has a substantially T-shaped cross-sectional profile. In this embodiment, the parking piston 30 has an annular parking piston body portion 32 with a central bore and a parking piston sleeve portion 34 which projects axially from the parking piston body portion 32. In this embodiment, the parking piston sleeve portion 34 is also annular and is radially spaced from the central bore. A parking piston shoulder portion 36 is defined between a radially inner surface of the parking piston body portion 32 and the parking piston sleeve portion 34. The parking piston shoulder portion 36 has an axially extending face and a radially extending face. The radially extending face is configured to face in the outboard direction when the parking piston 30 is located in the wet disc brake 16. The radially extending face acts as an engaging surface that is configured to oppose an engageable surface of the service piston 24 (described in more detail below). The parking piston shoulder portion 36 is more radially inward than the remainder of the parking piston 30, i.e., the parking piston shoulder portion 36 is closer to the radially inner surface of the parking piston 30 than the radially outer surface of the parking piston 30.

In this embodiment, the service piston 24 has with a substantially T-shaped cross-sectional profile. Specifically, the service piston 24 has an annular service piston body portion 26 with a central bore and a service piston boss portion 28 which projects axially from the service piston body portion 26. In this embodiment, the service piston boss portion 28 is also annular and radially spaced from an radially outer surface of the service piston body portion 26. A service piston shoulder portion 29 is defined between the radially outer surface of the service piston 24 and the service piston boss portion 28. The service piston shoulder portion 29 has an axially extending face and a radially extending face. The radially extending face is configured to face in the inboard direction when the service piston 24 is located in the wet disc brake 16. The radially extending face acts as the engageable surface that is configured to be opposed by the engaging surface of the parking piston 30. When the parking piston 30 is actuated, the engaging surface of the parking piston shoulder portion 36 engages the engageable surface of the service piston shoulder portion 29 to actuate the service piston 24 in the direction of the disc pack 22 to apply the wet disc brake 16.

Therefore, it can be seen that the parking piston shoulder portion 36 and the service piston shoulder portion 29 have corresponding profiles that allow the parking piston 30 to key with the service piston 24. This helps to reduce the axial space required for the parking piston 30 and the service piston 24 as the parking piston 30 and service piston 24 are generally aligned along the longitudinal axis. At least a portion of the parking piston 30 is concentric with the service piston 24. The parking piston 30 does not project axially beyond the service piston 24. When the wet disc brake 16 is assembled, the parking piston body portion 32 locates in the parking piston chamber 52 as it has an outer diameter that substantially corresponds to the diameter D1 of the parking piston chamber 52. However, it can be seen from FIG. 3 that the parking piston sleeve portion 34 projects in the axially outboard direction such that the parking piston sleeve portion 34 is located in the service piston chamber 54. The parking piston sleeve portion 34 has an outer diameter that substantially corresponds to the diameter D2 of the service piston chamber 54.

The parking piston sleeve portion 34 has an inner diameter that substantially corresponds to the outer diameter of the service piston body portion 26, which substantially corresponds to the diameter D3 of the disc pack chamber 56. Therefore, the service piston body portion 26 locates in the parking piston sleeve portion 34 such that it is located in the service piston chamber 54. The service piston boss portion 28 projects in the axially inboard direction such that the service piston boss portion 28 locates in the parking piston chamber 52. The service piston boss portion 28 has an outer diameter that corresponds to the diameter of the bore in the parking piston 30.

In other embodiments, rather than a separate service piston chamber 54 and parking piston chamber 52, there could be a single chamber that has a consistent inner diameter to locate both the service piston 24 and the parking piston 30, which could be dimensioned appropriately.

The parking piston body portion 32 has a plurality of recesses 78 circumferentially distributed in an outboard surface (see FIG. 4). The recesses 78 locate resilient elements in the form of parking springs 76, in this embodiment. During normal use of the wet disc brake 16 and while the vehicle 2 is running, the parking piston chamber is pressurized with hydraulic fluid. This counters the biasing force of the parking springs 76. When a user wishes to apply the parking brake to lock the wheels of the vehicle 2, i.e., when the vehicle 2 is stationary, the hydraulic fluid is evacuated from the parking piston chamber through the parking piston conduit 66. As there will no longer be any countering force, the parking springs 76 will urge the parking piston 30 in the outboard direction to engage the service piston 24 and apply the wet disc brake 16 by compressing the disc pack 22. To release the parking brake again, hydraulic fluid is introduced into the parking piston chamber to urge the parking piston 30 and parking springs 76 to retract in the inboard direction, such that the service piston 24 is no longer engaged and is free to return in the inboard direction back to its rest position.

As described above, the disc pack 22 has counter discs and friction discs. In this embodiment, each counter disc is an annular ring. Each counter disc has an outer diameter substantially equal to the internal diameter of the disc pack chamber 56 but slightly lower such that there is a radial spacing, and the counter discs do not contact the internal surface of the disc pack chamber 56. In this embodiment, each counter disc has an inner diameter that is around 20mm less than the outer diameter of the counter disc such that the counter discs are radially spaced from the axle 38. Each counter disc includes at least one radially extending projection configured to engage in a corresponding slots 58 of the caliper housing 40 to restrict relative rotation of the counter discs and the brake caliper 20. In this embodiment, each radial projection is a radially extending lug. Each lug is shaped as a rounded off rectangle, to correspond to the cross-sectional shape of the slots 58. Each lug is received in a corresponding one of the slots 58. The complimentary shapes help to avoid relative rotation movement and enables smooth axial movement of the counter discs during a braking operation. In this embodiment, each counter disc has four circumferentially distributed lugs to correspond to four circumferentially distributed slots 58. In other embodiments, however, any suitable number of lugs and slots 58 could be provided. This could be greater than or fewer than four.

In this embodiment, each friction disc is an annular ring. Each friction disc includes an outer ring portion and an inner ring portion radially inwardly of the outer ring portion. In this embodiment, the outer ring portion has an outer diameter and an inner diameter that substantially match the outer diameter and inner diameter of the counter discs (excluding the lugs). The outer ring portion typically includes friction material, which is wear resistant. In this embodiment, the friction material is a paper-based material with a pattern to increase the surface area, e.g. a waffle pattern to improve heat distribution. The paper-based material is adhered to the outer ring portion. The inner ring portion has a central bore. In this embodiment, the central bore includes splines that engage with corresponding splines on the axle 38 to ensure that each friction disc is rotationally fixed to the axle 38 but movable in the axial direction along the axis A-A. In this embodiment, the inner ring portion also includes a least one through hole. In this embodiment, each friction disc has five through holes distributed circumferentially around the central bore. The through holes allow lubricant to pass through, such that the disc pack 22 remains lubricated. Typically, the lubricant reaches the half-way level of the disc pack chamber 56. When the service piston 24 is actuated, the friction material of each friction disc contacts an adjacent counter disc. As each friction disc is rotatably fixed to the axle 38 via the spines, when the friction material of each friction disc contacts an adjacent counter disc, the rotation of the axle 38 is impeded and the vehicle 2 slows.

Where the word 'or' appears, this is to be construed to mean 'and/or'. This is such that items referred to are not necessarily mutually exclusive and may be used in any appropriate combination.

The invention has been described above with reference to one or more specific embodiments. However, it will be appreciated that various changes and modifications can be made without departing from the scope of the invention as defined in the claims.

The appended claims set out combinations of features described above. However, the scope of the present disclosure is not limited to these combinations claimed. Instead, the scope of the present disclosure extends to encompass any combination of features herein disclosed.

## Claims

1. A wet disc brake for an off-highway vehicle including a vehicle shaft having a longitudinal axis extending in an inboard-outboard direction, the wet disc brake comprising:
a brake caliper configured to be locatable on the shaft, the brake caliper including:
a disc pack located within the brake caliper and configured to be rotatably fixable to the shaft;
a service piston actuatable within the brake caliper during a brake operation to compress the disc pack to inhibit rotation of the shaft and slow the vehicle, the service piston having an inboard face defining a first radial plane and an outboard face defining a second radial plane spaced from the first radial plane; and
a parking piston coaxial with the service piston and actuatable within the brake caliper during a parking operation to apply a force to the service piston to actuate the service piston,
wherein at least a portion of the parking piston is located between the first and second radial planes.

2. The wet disc brake of claim 1, wherein the parking piston comprises an engaging surface configured to directly or indirectly engage a corresponding engageable surface of the service piston when the parking piston is actuated, to actuate the service piston in the direction of the disc pack.

3. The wet disc brake of claim 2, wherein the parking piston comprises a parking piston shoulder portion having a substantially radially extending face which comprises the engaging surface.

4. The wet disc brake of claim 3, wherein the service piston comprises a service piston shoulder portion having a substantially radially extending face which comprises the engageable surface, wherein the radially extending face of the parking piston is configured to opposed the radially extending face of the service piston.

5. The wet disc brake of claim 4, wherein a majority of the parking piston is arranged radially outwardly of the service piston.

6. The wet disc brake of claim 5, wherein the parking piston shoulder portion is a radially inward part of the parking piston.

7. The wet disc brake of claim 5 or 6, wherein the service piston shoulder portion is a radially outward part of the service piston.

8. The wet disc brake of any one of claims 1 to 7, wherein the parking piston is substantially cylindrical and the service piston is substantially cylindrical and at least a portion of the parking piston is concentric with the service piston.

9. The wet disc brake of any one of claims 1 to 8, wherein the parking piston does not project axially beyond the service piston.

10. The wet disc brake of any one of claims 1 to 9, wherein the wet disc brake further comprises at least one resilient element to actuate the parking piston, optionally wherein the wet disc brake comprises a plurality of resilient elements, circumferentially distributed, to actuate the parking piston.

11. The wet disc brake of claim 11, wherein the parking piston comprises a plurality of recesses in a surface facing away from the disc pack to locate the plurality of resilient elements.

12. The wet disc brake of any one of claims 1 to 11, wherein the parking piston is located in a parking piston chamber defined by the brake caliper, the parking piston chamber being in communication with a parking piston conduit for hydraulic fluid such that when the parking piston chamber comprises hydraulic fluid, the parking piston is restricted from actuating the service piston.

13. The wet disc brake of claim 12, wherein the brake caliper is two-part, comprising a caliper housing and a cover portion fixed to the caliper housing, optionally wherein the caliper housing comprises a bore, wherein the bore has a varying diameter to define the parking piston chamber, a service piston chamber and a disc pack chamber, optionally wherein the parking piston chamber has a first diameter, the service piston chamber has a second diameter and the disc pack chamber has a third diameter, wherein the first diameter is greater than the second diameter and the second diameter is greater than the third diameter.

14. The wet disc brake of claim 13, wherein the caliper housing comprises a service piston conduit for hydraulic fluid and the cover portion comprises the parking piston conduit.

15. An axle assembly for an off-highway vehicle comprising:
a shaft in communication with a wheel of the vehicle; and
the wet disc brake of any one of claims 1 to 14, located on the shaft.
